# EUROPEAN PATENT APPLICATION

(11) **EP 4 534 403 A1**
(43) Date of publication of application: **09.04.2025**
(21) Application number: 23815629.3
(22) Date of filing: 24.04.2023
(51) Int. Cl.: B63B 49/00, G08G 3/02, G01S 13/937

(54) **SHIP INFORMATION SHARING DEVICE, SHIP INFORMATION SHARING METHOD, AND SHIP INFORMATION SHARING SYSTEM**

(30) Priority: 02.06.2022 JP 2022090393
(71) Applicant: FURUNO ELECTRIC CO., LTD., Nishinomiya-City, Hyogo 662-8580 (JP)
(72) Inventor: YAMABAYASHI, Jun, Nishinomiya-City, Hyogo 662-8580 (JP)
(74) Representative: Müller Hoffmann & Partner
(86) International application number: PCT/JP2023/016182
(87) International publication number: WO 2023/233868

(57) **Abstract**

A ship information sharing device capable of sharing navigational data of an amount suitable for a channel capacity is provided. The ship information sharing device includes an acquirer, a channel capacity acquirer, a thinner, and a transmission processor. The acquirer serially acquires navigational data according to navigation of a ship, which is detected by a detection apparatus mounted on the ship. The channel capacity acquirer acquires a channel capacity of a channel to a ship information gathering device. The thinner changes, according to the channel capacity, a frequency to include the navigational data into a transmission data set serially transmitted to the ship information gathering device. The transmission processor transmits the transmission data set to the ship information gathering device.

## Description

### TECHNICAL FIELD

The present disclosure relates to a ship information sharing device, a ship information sharing method, and a ship information sharing system.

### BACKGROUND ART

Patent Document 1 discloses a radar signal recording and reproducing apparatus provided with a recording system which records a radar video obtained from a radar device on a recording medium, and a playback system which plays radar video on the recording medium.

### [Reference Document(s) of Conventional Art]

### [Patent Document]

[Patent Document 1] JP1998-253749A

### DESCRIPTION OF THE DISCLOSURE

### [Problem(s) to be Solved by the Disclosure]

Meanwhile, although it is desired to share navigational data generated by a detection apparatus, such as a radar, mounted on a ship, between the ship and land or between the ship and another ship, marine communications, such as satellite communications, are difficult to always share a large amount of navigational data because its channel capacity varies.

The present disclosure is made in view of the above-described problem, and a main purpose thereof is to provide a ship information sharing device, a ship information sharing method, and a ship information sharing system, which can share a suitable amount of navigational data for a channel capacity.

### [Summary of the Disclosure]

In order to solve the above problem, a ship information sharing device according to one aspect of the present disclosure includes an acquirer, a channel capacity acquirer, a thinner, and a transmission processor. The acquirer serially acquires navigational data according to navigation of a ship, which is detected by a detection apparatus mounted on the ship. The channel capacity acquirer acquires a channel capacity of a channel to a ship information gathering device. The thinner changes, according to the channel capacity, a frequency to include the navigational data into a transmission data set serially transmitted to the ship information gathering device. The transmission processor transmits the transmission data set to the ship information gathering device. According to this configuration, it becomes possible to share the navigational data of an amount suitable for the channel capacity.

In the above aspect, the acquirer may acquire another-ship data indicative of a position of another ship existing around the ship, as the navigational data. Another-ship data of another ship of which a distance from the ship is a threshold or above may not be included into the transmission data set. The thinner may change the threshold according to the channel capacity. According to this configuration, it is possible to limit the another-ship data to those for another ship comparatively near the ship as the channel capacity decreases, while including those for another ship comparatively distant from the ship as the channel capacity increases.

In the above aspect, the acquirer may acquire another-ship data indicative of a position of another ship existing around the ship, as the navigational data. The ship information sharing device may further include a calculator which calculates a collision risk of the ship with the another ship. Another-ship data of another ship of which the collision risk is a threshold or below may not be included into the transmission data set. The thinner may change the threshold according to the channel capacity. According to this configuration, it is possible to limit the another-ship data to those for another ship with a higher collision risk as the channel capacity decreases, while including those for another ship with a lower collision risk as the channel capacity increases.

In the above aspect, the acquirer may acquire the position and a ship speed of the ship as the navigational data. The thinner may change a frequency to include the position of the ship into the transmission data set according to the ship speed. According to this configuration, it is possible to increase the frequency to include the position of the ship as the ship speed increases.

In the above aspect, the acquirer may acquire another-ship data indicative of a position of another ship existing around the ship as the navigational data. With respect to a frequency to include another-ship data of another ship within an observing area into the transmission data set, the thinner may reduce a frequency to include the another-ship data of another ship within a non-observing area other than the observing area, as the channel capacity decreases. According to this configuration, even if the channel capacity decreases, the entire amount of communication data can be reduced, without reducing much the frequency to include the another-ship data within the observing area.

In the above aspect, the ship information sharing device may further include an acquirer which acquires a heading of the ship, and the thinner may use an area between the heading and the starboard direction on the basis of the ship as the observing area. According to this configuration, it is possible to use the area between the heading and a certain starboard direction where the ship is obligated to take an evading maneuver when another ship exists, as the observing area.

In the above aspect, the ship information sharing device may further include an acquirer which acquires a heading of the ship, and the thinner may use an area ahead of the ship as the observing area. According to this configuration, it is possible to use the area ahead of the ship where a ship operator especially pays attention, as the observing area.

In the above aspect, the ship information sharing device may further include an acquirer which acquires a heading of the ship, and the thinner may use a guard zone for detecting an entry of a target object set on the basis of the ship in the radar as the observing area. According to this configuration, it is possible to use the guard zone as the observing area.

In the above aspect, the ship information sharing device may further include an acquirer which acquires a position of the ship, and a calculator which calculates a collision risk of the ship with the another ship. The thinner may use an area corresponding to another ship or an area of which the collision risk is a threshold or above as the observing area. According to this configuration, it is possible to use the area corresponding to the another ship or the area with a comparatively high collision risk, as the observing area.

In the above aspect, the acquirer may acquire a plurality of types of navigational data detected by a plurality of types of detection apparatuses. With respect to a frequency to include a given type of navigational data among the plurality of types of navigational data, the thinner may reduce a frequency to include other types of navigational data into the transmission data set, as the channel capacity decreases. According to this configuration, it is possible to limit to the given type of navigational data, when the channel capacity decreases.

In the above aspect, the acquirer may acquire the-ship data according to the ship itself, and another-ship data according to another ship other than the ship, as the navigational data. The thinner may reduce a frequency to include the the-ship data into the transmission data set with respect to a frequency to include the another-ship data, as the channel capacity decreases. According to this configuration, it is possible to limit to the another-ship data, when the channel capacity decreases.

Further, a ship information sharing method according to another aspect of the present disclosure includes serially acquiring navigational data according to navigation of a ship, the navigational data detected by a detection apparatus mounted on the ship, acquiring a channel capacity of a channel to a ship information gathering device, changing, according to the channel capacity, a frequency to include the navigational data into a transmission data set serially transmitted to the ship information gathering device, and transmitting the transmission data set to the ship information gathering device. According to this configuration, it becomes possible to share the navigational data of an amount suitable for the channel capacity.

Further, a ship information sharing system according to another aspect of the present disclosure includes a ship information gathering device, a detection apparatus, a ship information sharing device, and a communication apparatus. The detection apparatus is mounted on a ship and serially generates navigational data according to navigation of the ship. The ship information sharing device acquires a channel capacity of a channel to the ship information gathering device, and changes, according to the channel capacity, a frequency to include the navigational data into a transmission data set serially transmitted to the ship information gathering device. The communication apparatus transmits the transmission data set to the ship information gathering device. According to this configuration, it becomes possible to share the navigational data of an amount suitable for the channel capacity.

### BRIEF DESCRIPTION OF DRAWINGS

Fig. 1 is a view illustrating one example of a ship information sharing system.
Fig. 2 is a view illustrating one example of a ship-side system.
Fig. 3 is a view illustrating one example of a land-side system.
Fig. 4 is a view illustrating one example of a ship information sharing device.
Fig. 5 is a view illustrating one example of a ship information sharing method according to a first embodiment.
Fig. 6 is a view illustrating one example of echo data.
Fig. 7 is a view illustrating one example of light echo data.
Fig. 8 is a view illustrating one example of the light echo data.
Fig. 9 is a view illustrating one example of the light echo data.
Fig. 10 is a view illustrating one example of the light echo data.
Fig. 11 is a view illustrating one example of the light echo data.
Fig. 12 is a view illustrating one example of the light echo data.
Fig. 13 is a view illustrating one example of the light echo data.
Fig. 14 is a view illustrating one example of the light echo data.
Fig. 15 is a view illustrating one example of the light echo data.
Fig. 16 is a view illustrating one example of a ship information sharing method according to a second embodiment.
Fig. 17 is a view illustrating one example of an image based on the echo data.
Fig. 18 is a view illustrating one example of an image based on the light echo data.
Fig. 19 is a view illustrating one example of a synthesized image.
Fig. 20 is a view illustrating one example of the synthesized image.
Fig. 21 is a view illustrating one example of the synthesized image.
Fig. 22 is a view illustrating one example of a ship information sharing method according to a third embodiment.
Fig. 23 is a view illustrating one example of a frequency change according to a channel capacity and a type.
Fig. 24 is a view illustrating one example of the frequency change according to the channel capacity and type.
Fig. 25 is a view illustrating one example of the frequency change according to the channel capacity and a range.
Fig. 26 is a view illustrating one example of a threshold change according to the channel capacity.
Fig. 27 is a view illustrating one example of the threshold change according to the channel capacity.

### MODE(S) FOR CARRYING OUT THE DISCLOSURE

Hereinafter, embodiments of the disclosure will be described with reference to the drawings.

### [System Outline]

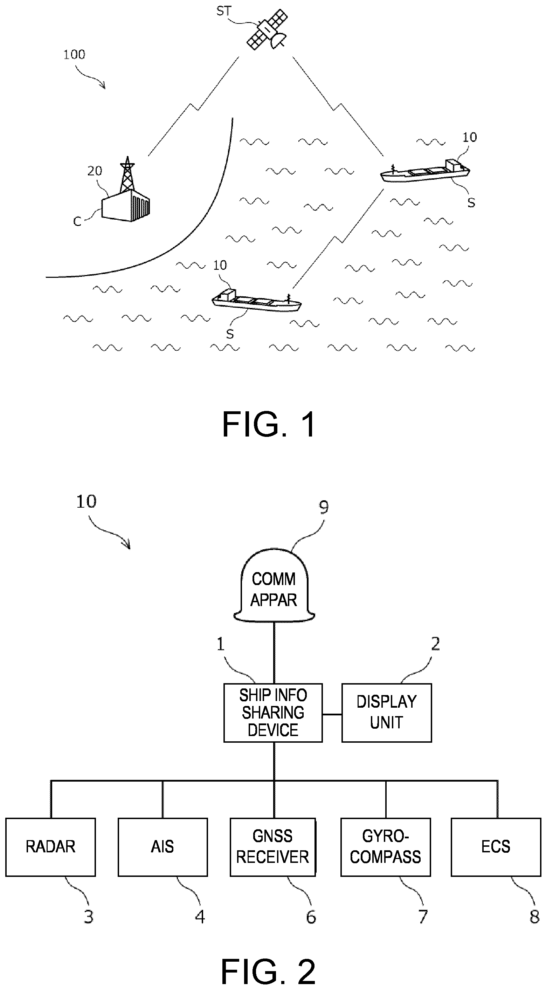

Fig. 1 is a view illustrating one example of a ship information sharing system 100. This drawing schematically illustrates ships S which travel on the sea, and a land control C. The ship information sharing system 100 may be provided with a ship-side system 10 mounted on the ship S, and a land-side system 20 installed in the land control C.

The ship-side system 10 and the land-side system 20 may be communicable with each other by satellite communications through a satellite ST. Not only the satellite communications but wireless communications which use microwave, ultrashort wave, shortwave, or medium wave, may also be used. Similarly, the ship-side systems 10 may also be communicable with each other.

The ship-side system 10 may serially transmit navigational data according to navigation of the ship S to the land-side system 20. The land-side system 20 may collect and use the navigational data transmitted from the ship-side system 10.

Fig. 2 is a block diagram illustrating one example of a configuration of the ship-side system 10. In the following description, when seen from a certain ship-side system 10, a ship S on which this ship-side system 10 is mounted is referred to as "the ship," and ship(s) other than the ship is/are referred to as "another ship" or "other ships."

The ship-side system 10 may be provided with a ship information sharing device 1, a display unit 2, a radar 3, an AIS 4, a GNSS receiver 6, a gyrocompass 7, and an ECS 8. These apparatuses may be connected to a network, such as LAN, and may be communicable with each other.

The ship information sharing device 1 may be a computer including a CPU, a RAM, a ROM, a nonvolatile memory, and an input/output interface. The CPU of the ship information sharing device 1 may perform information processing according to a program loaded to the RAM from the ROM or the nonvolatile memory. The program may be supplied via an information storage medium, such as an optical disc or a memory card, or may be supplied via a communication network, such as the Internet or LAN.

The display unit 2 may display an image for the indication generated by the ship information sharing device 1. The display unit 2 may display a radar image, an electronic nautical chart, or a synthesized image thereof. The display unit 2 may be a display device, for example, with a touch sensor (i.e., a touch panel). The touch sensor may detect a position in a screen which is instructed, for example, using a user's finger. The instructed position may be inputted by a trackball etc., without being limited to the above configuration.

The radar 3 may transmit a radio wave around the ship and receives its reflection wave, and generate echo data based on the reception signal. The echo data may include an echo intensity value in each azimuth direction and at each distance on the basis of the ship. Further, the radar 3 may identify a target object from the echo data, and generate TT (Target Tracking) data indicative of a position and a velocity (traveling speed) of the target object.

The AIS (Automatic Identification System) 4 may receive AIS data from another ship which exists around the ship, or a land control C. Not only the AIS but a VDES (VHF Data Exchange System) may also be used. The AIS data may include an identification signal, a name, a position, a course, a speed, a type, a length, and a destination of another ship.

The GNSS receiver 6 may detect a position of the ship based on the radio wave received from a GNSS (Global Navigation Satellite System). The gyrocompass 7 may detect the heading or bow direction of the ship. Not only the gyrocompass but a GPS compass may also be used.

The ECS (Electronic Chart System) 8 may acquire the position of the ship from the GNSS receiver 6, and display the position of the ship on an electronic nautical chart. The ECS 8 may also display a planned route of the ship on the electronic nautical chart. The ECS 8 may be an ECDIS (Electronic Chart Display and Information System). A GNSS plotter may also be used, without being limited to this configuration.

A communication apparatus 9 may be radio equipment which realizes the satellite communications, and may realize the communication with the land control C or another ship. The communication apparatus 9 may also include radio equipment for microwave, ultrashort wave, shortwave, or medium wave, for example.

Although in this embodiment the ship information sharing device 1 and the display unit 2 are mutually-independent devices, the ship information sharing device 1 and the display unit 2 may be an integrated device.

Further, although the ship information sharing device 1 is an independent device, it may be integrated with another device, such as the radar 3 or the ECS 8. That is, the functional part of the ship information sharing device 1 may be realized by other devices.

Similarly, although the display unit 2 is also an independent device, another display unit provided to another device, such as the radar 3 or the ECS 8, may also be used as the display unit 2 to display the image for indication generated by the ship information sharing device 1.

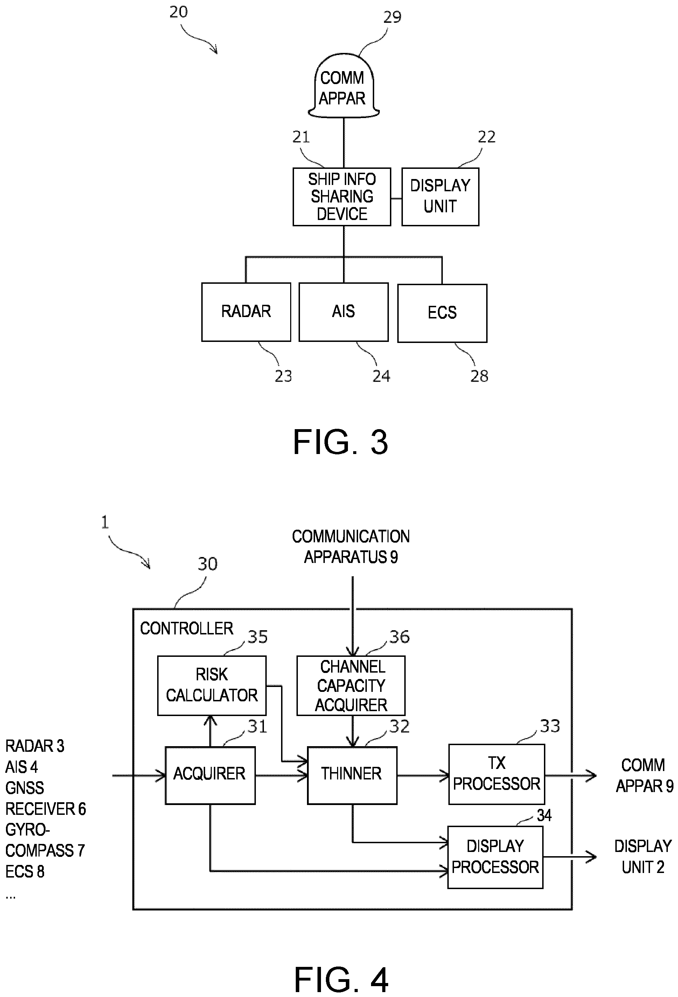

Fig. 3 is a view illustrating one example of the land-side system 20. The land-side system 20 may be provided with a ship information gathering device 21, a display unit 22, a radar 23, an AIS 24, an ECS 28, and a communication apparatus 29. Since these apparatuses are similar to the apparatuses included in the ship-side system 10 described above, detailed explanation is omitted.

### [Device Configuration]

Fig. 4 is a block diagram illustrating one example of a configuration of the ship information sharing device 1. A controller 30 of the ship information sharing device 1 may be provided with an acquirer 31, a thinner 32, a transmission processor 33, a display processor 34, a risk calculator 35, and a channel capacity acquirer 36. These functional parts may be realized by the CPU of the ship information sharing device 1 executing information processing according to a program.

The acquirer 31 may serially acquire navigational data according to navigation of the ship detected by a detection apparatus mounted on the ship. For example, the acquirer 31 may acquire echo data generated by the radar 3 mounted on the ship.

The detection apparatus may be the radar 3, the AIS 4, the GNSS receiver 6, the gyrocompass 7, or the ECS 8.

The navigational data may include the echo data generated by the radar 3, the AIS data received by the AIS 4, the position of the ship detected by the GNSS receiver 6, the heading of the ship detected by the gyrocompass 7, and route data generated by the ECS 8.

The AIS data received by the AIS 4 is one example of another-ship data (or other-ship data, if plural) indicative of the position of another ship which exists around the ship. TT data generated by the radar 3 may similarly be used as one example of another-ship data.

The navigational data may be a ship speed (traveling speed) measured by a ship speed meter, or log data including parameters of the engine. The position, the heading, the ship speed, and the log data are examples of the-ship data indicative of a state of the ship.

The navigational data may be tidal current measured by a tidal current meter, a wind speed or a wind direction measured by an anemometer, or a height or a cycle of ocean wave measured by a wave gage. These data are examples of data indicative of a state of the environment around the ship (i.e., "the-ship environment data").

The thinner 32 may perform given thinning to the navigational data acquired by the acquirer 31. For example, the thinner 32 may thin out value(s) from the echo data and generate light echo data of which an amount of data is smaller than the echo data (the generation of the light echo data will be described in detail in the following first embodiment).

In addition, the thinner 32 may change the frequency to include the navigational data into a transmission data set which is serially transmitted to the ship information gathering device 21, in accordance with the channel capacity acquired by the channel capacity acquirer 36 (the change in the frequency according to the channel capacity will be described in detail below in the following third embodiment).

The transmission processor 33 may serially transmit the transmission data set to the ship information gathering device 21 by using the communication apparatus 9. For example, the transmission processor 33 may transmit the light echo data generated by the thinner 32 after including it in the transmission data set. In addition, the transmission processor 33 may include the navigational data in the transmission data set at the frequency determined by the thinner 32, and then transmit the transmission data set.

The display processor 34 may generate the image for indication based on the navigational data acquired by the acquirer 31 and display it on the display unit 2. For example, the display processor 34 may generate an image based on the echo data acquired by the acquirer 31.

Further, the display processor 34 may generate and display information based on the light echo data generated by the thinner 32 (the indication of the information based on light echo data will be described in detail below in the second embodiment).

The risk calculator 35 may calculate a collision risk of the ship with another ship based on the-ship data and another-ship data which are acquired by the acquirer 31. The risk calculator 35 may identify another ship with the collision risk, for example, using an index, such as a DCPA (Distance to Closest Point of Approach). Alternatively, the risk calculator 35 may identify an area with the collision risk, by a technique, such as an OZT (Obstacle Zone by Target).

The channel capacity acquirer 36 may acquire a channel capacity of a channel between the ship information sharing device 1 and the ship information gathering device 21. The channel capacity may be an index indicative of an information transmission capacity of the channel, which may be referred to as a "data-transmission capacity," a "channel capacity," a "transmission rate," or "a communication speed."

For example, the channel capacity acquirer 36 may acquire the channel capacity by sending out a dummy packet to the ship information gathering device 21 and receiving a feedback of the channel capacity measured by the ship information gathering device 21 based on the dummy packet. The channel capacity acquirer 36 may acquire the channel capacity by measuring a field intensity of the radio wave received from the satellite ST.

### [FIRST EMBODIMENT]

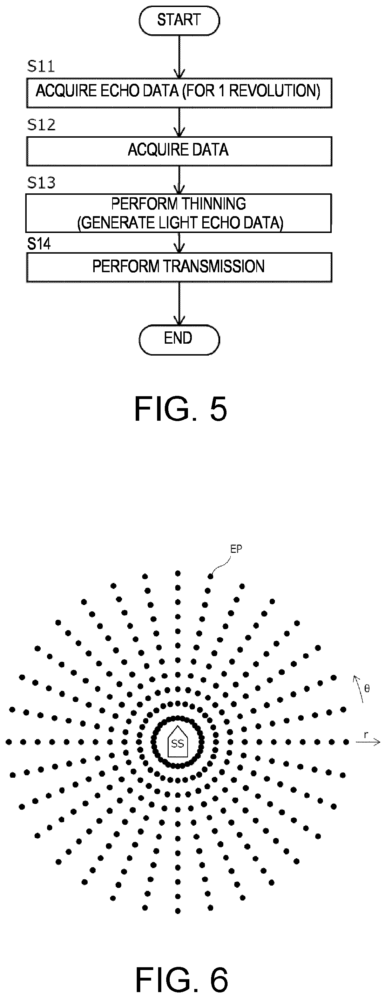

Fig. 5 is a flowchart illustrating one example of a procedure of processing according to the generation of the light echo data of the ship information sharing method realized by the ship information sharing system 100. The controller 30 of the ship information sharing device 1 may function as the acquirer 31, the thinner 32, and the transmission processor 33 which are illustrated in Fig. 4 described above by performing the information processing illustrated in this drawing according to the program.

First, the controller 30 may acquire the echo data generated by the radar 3 mounted on the ship (S11: Processing as the acquirer 31). The echo data may be acquired for every one revolution (360°) of an antenna.

Fig. 6 is a schematic diagram illustrating one example of the echo data for one revolution. "θ" indicates an azimuth direction on the basis of a ship SS (the ship), and "r" indicates a range (distance) direction on the basis of the ship SS. As illustrated in this drawing, the echo data may include an echo intensity value EP (black dot or circle in this drawing) in each azimuth direction and at each distance on the basis of the ship SS.

Next, the controller 30 may acquire data to be used for thinning the echo data, such as the position or the heading of the ship (S12: Processing as the acquirer 31).

Next, the controller 30 may perform thinning of the echo data, and generate light echo data of which an amount of data is smaller than the echo data (S13: Processing as the thinner 32).

In thinning, a value according to at least one of the azimuth direction θ and the range direction r from the echo intensity values EP included in the echo data may be thinned out. The value according to the azimuth direction θ may be a value at the position identified in the azimuth direction θ, and the value according to the range direction r may be a value at the position identified in the range direction r.

Next, the controller 30 may transmit the transmission data set including the light echo data to the ship information gathering device 21 by using the communication apparatus 9 (S14: Processing as the transmission processor 33). The transmission data set may be transmitted to the exterior of the ship from the communication apparatus 9, and may be acquired by the ship information gathering device 21.

By the above, the processing according to the generation of the light echo data is finished. According to this configuration, it becomes possible to share the echo data, while reducing the amount of data, by generating the light echo data.

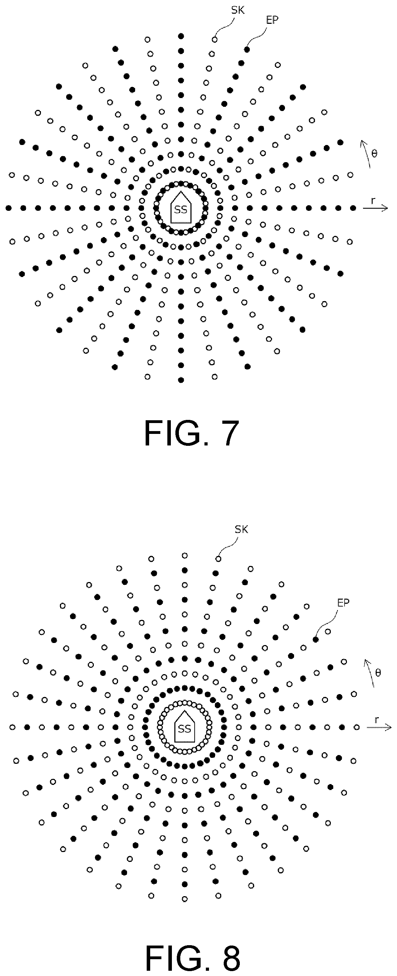

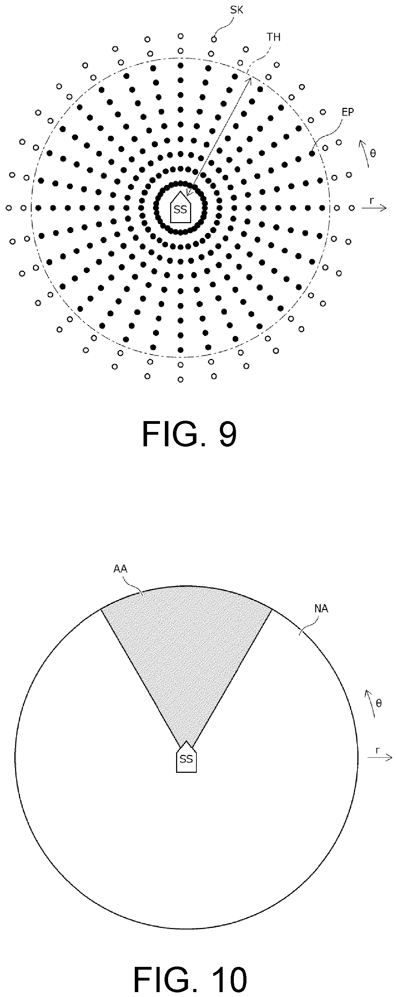

Below, one example of the thinning is described. Figs. 7 to 15 are schematic diagrams illustrating one example of the light echo data generated by the thinning. A white circle in Figs. 7 to 9 indicates a thinned-out value SK. In Figs. 10 to 15, illustration of the circle symbols is omitted in order to illustrate a range.

As illustrated in Fig. 7, the thinner 32 may generate the light echo data by periodically thinning out a value in the azimuth direction θ. This drawing illustrates one example in which the amount of data is reduced in half by thinning out the value alternately in the azimuth direction θ. Every two or more values may be thinned out in the azimuth direction θ, without being limited to this configuration.

As illustrated in Fig. 8, the thinner 32 may generate the light echo data by periodically thinning out the value in the range direction r. This drawing illustrates one example in which the amount of data is reduced in half by thinning out the value alternately in the range direction r. Every two or more values may be thinned out in the range direction r, without being limited to this configuration.

As illustrated in Fig. 9, the thinner 32 may generate the light echo data by thinning out all the values of which the distance from the ship SS is a threshold TH or above. Thus, the amount of data can be reduced, while maintaining the values comparatively near the ship SS which are more important.

As illustrated in Figs. 10 to 15, the thinner 32 may set an observing area AA and a non-observing area NA around the ship SS to set the thinning ratio of the value in the non-observing area NA lower than the thinning ratio of the value in the observing area AA. In other words, the thinning ratio of the value in the non-observing area NA may be set higher than the thinning ratio of the value observing area AA.

The thinning ratio may be expressed by a rate of the number of values after thinning out to the number of values before the thinning out. The thinning ratio may correspond to a cycle to thin out the value. The thinning ratio may become higher as the cycle to thin out the value increases, and the thinning ratio may become smaller as the cycle to thin out the value decreases.

As illustrated in Fig. 10, the thinner 32 may set an area ahead of the ship SS as the observing area AA, and set other areas other areas as the non-observing area NA. The area ahead of the ship SS may be an angle range with a given width of which the center is the heading of the ship. Therefore, the thinning ratio of the area ahead of the ship SS where a ship operator especially pays attention can be reduced.

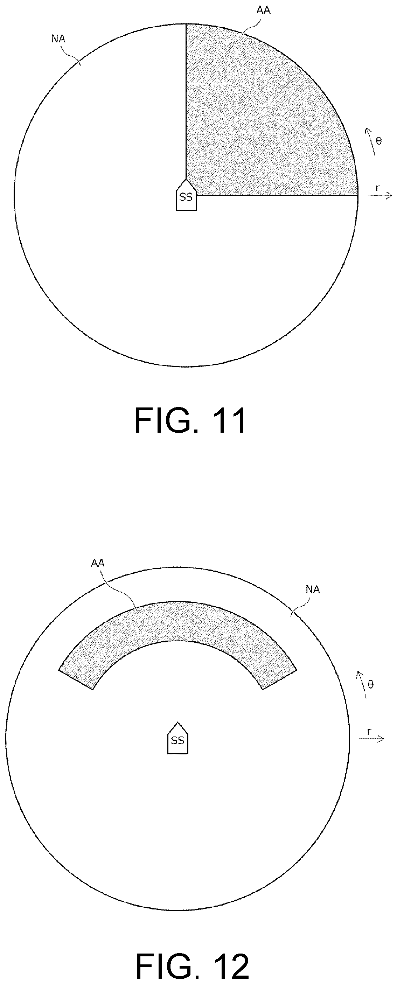

As illustrated in Fig. 11, the thinner 32 may use an area between the heading and a certain starboard direction on the basis of the ship SS as the observing area AA, and use other areas as the non-observing area NA. Therefore, the thinning ratio of the area between the heading and a certain starboard direction where the ship is obligated to take an evading maneuver when another ship exists, can be reduced.

As illustrated in Fig. 12, the thinner 32 may use a guard zone for detecting an entry of a target object set with respect to the ship SS in the radar 3 as the observing area AA, and may use other areas as the non-observing area NA. Therefore, the thinning ratio of the guard zone for detecting the entry of the target object can be reduced.

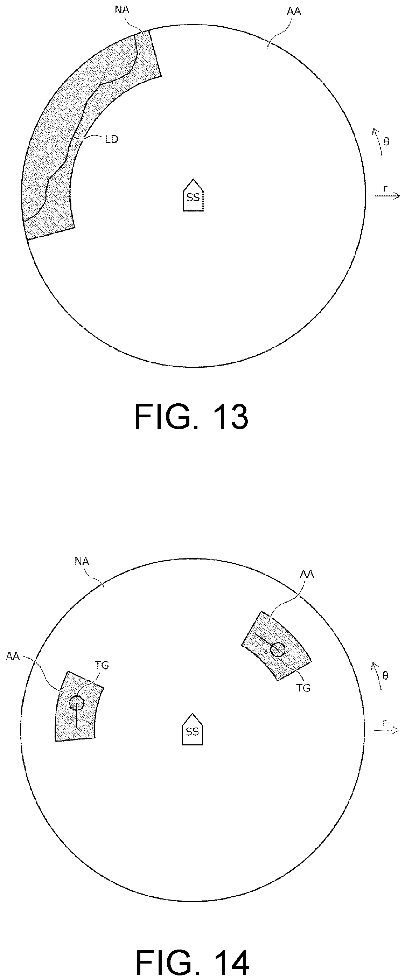

As illustrated in Fig. 13, the thinner 32 may use an area corresponding to a land LD identified based on the nautical chart data of the ECS 8 as the non-observing area NA, and may use other areas as the observing area AA. Therefore, the amount of data can be reduced by increasing the thinning ratio of the area corresponding to the land. Note that all the values of the area corresponding to the land may be thinned out.

As illustrated in Fig. 14, the thinner 32 may use an area corresponding to another ship TG identified based on the another-ship data from the AIS 4 as the observing area AA, and may use other areas as the non-observing area NA. Therefore, the thinning ratio of the area including another ship can be reduced.

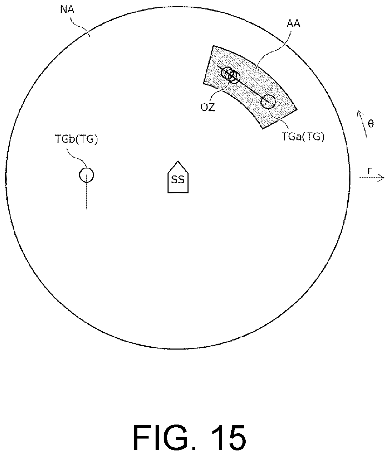

As illustrated in Fig. 15, the thinner 32 may use an area corresponding to another ship TGa or the area OZ where the collision risk calculated by the risk calculator 35 is the threshold or above as the observing area AA, and may use other areas as the non-observing area NA. In this case, another ship TGb of which the collision risk is below the threshold may not be included in the observing area AA. Therefore, the thinning ratio of the area including the another ship TGa of which the collision risk is the threshold or above, or the area OZ can be reduced.

As described above, by setting the observing area AA and the non-observing area NA around the ship SS and setting the thinning ratio of the value in the observing area AA lower than the thinning ratio of the value in the non-observing area NA, it becomes possible to reduce the amount of data, while maintaining information necessary for remote navigation or land surveillance operation.

Note that the thinner 32 may adaptively change the thinning ratio according to the channel capacity acquired by the channel capacity acquirer 36 or the ship speed. For example, in the example of Fig. 7 or 8, the cycle to thin out the value may be decreased as the channel capacity decreases. In the example of Fig. 9, the threshold TH may be decreased as the channel capacity decreases.

Further, in the examples of Figs. 10 to 15, the thinning ratio of the non-observing area NA may be increased with respect to the thinning ratio of the observing area AA as the channel capacity decreases. That is, a difference between the thinning ratio of the observing area AA and the thinning ratio of the non-observing area NA may be increased as the channel capacity decreases.

Although in the above embodiment the light echo data is generated by thinning out the values from the echo data, an image obtained, for example, by compressing and converting the echo data for one revolution into JPEG or GIF format, may be generated as the light echo data.

### [SECOND EMBODIMENT]

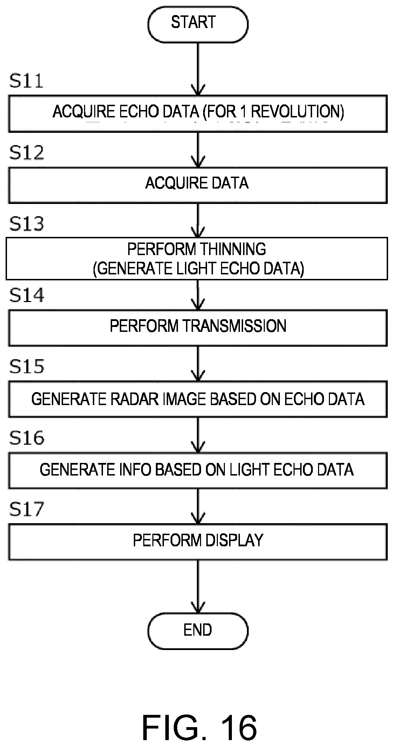

Fig. 16 is a flowchart illustrating one example of a procedure of processing according to indication of information based on the light echo data of the ship information sharing method realized by the ship-side system 10. The controller 30 of the ship information sharing device 1 may function as the acquirer 31, the thinner 32, the transmission processor 33, and the display processor 34 which are illustrated in Fig. 4 by executing information processing illustrated in this drawing according to the program.

First, similarly to the first embodiment described above, the controller 30 may perform the thinning of the echo data, and then perform transmission of the light echo data (S11-S14).

Next, the controller 30 may generate a radar image based on the echo data (S15: Processing as the display processor 34). The controller 30 may generate a synthesized image in which the radar image and the electronic nautical chart are synthesized.

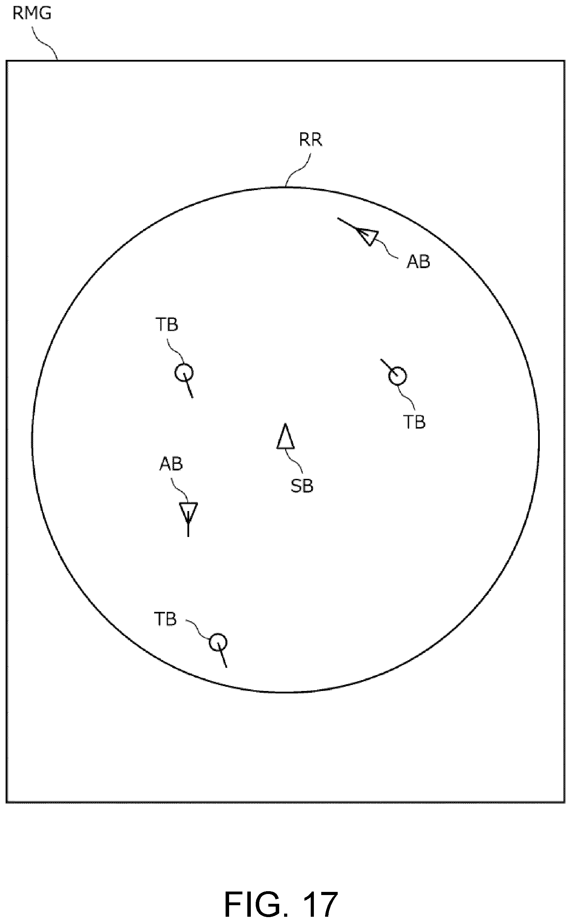

Fig. 17 is a view illustrating one example of a radar image RMG based on the echo data. The radar image RMG may include target-object symbols TB which indicate target objects detected by the radar 3 within a circular range RR corresponding to a radio-wave reachable range centering on the ship position SB. The radar image RMG may further include a target-object symbol AB indicative of another ship detected by the AIS 4.

Next, the controller 30 may generate the information based on the light echo data, and display the radar image based on the echo data and the information based on the light echo data on the display unit 2 (S16 and S17: Processing as the display processor 34).

By displaying the information based on the light echo data, it becomes possible to grasp the information displayed on the ship information gathering device 21 side also on the ship information sharing device 1 side.

Below, one example of the indication of the information based on the light echo data is described.

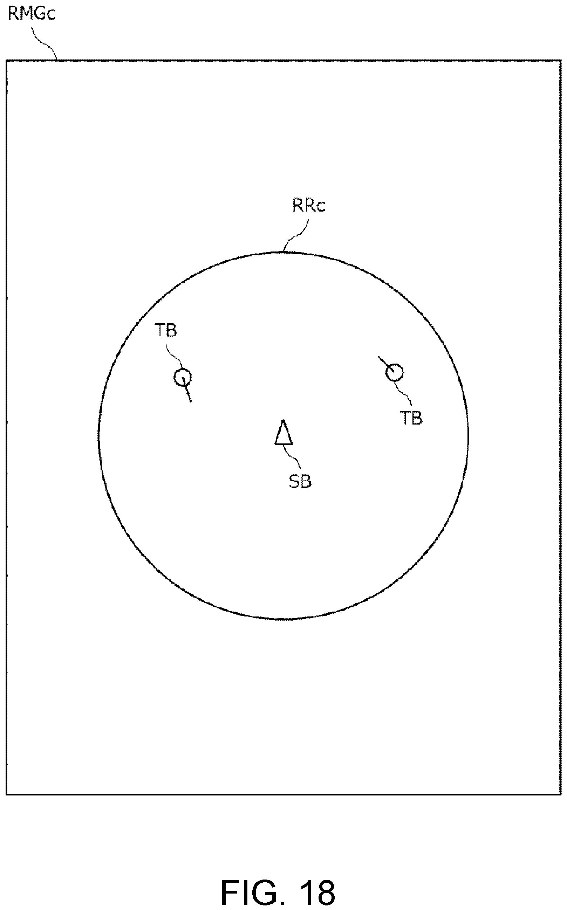

As illustrated in Fig. 18, the display processor 34 may display a radar image RMGc based on the light echo data. That is, the display processor 34 may individually display the radar image RMG (see Fig. 17) based on the echo data, and the radar image RMGc (see Fig. 18) based on the light echo data.

For example, the two radar images RMG and RMGc may be displayed side by side, or the displayed image may be switched between the two radar images RMG and RMGc according to operation of a button displayed on a screen.

In the illustrated example, the radar image RMGc based on the light echo data where the value of which the distance from the ship is the threshold TH or above is thinned out is illustrated (see Fig. 9). Thus, a circular range RRc of the radar image RMGc may be smaller than the circular range RR of the radar image RMG.

The radar image RMGc based on the light echo data may be the same as the radar image displayed on the ship information gathering device 21 side. Thus, it becomes easy to grasp the information displayed on the ship information gathering device 21 side also on the ship information sharing device 1 side.

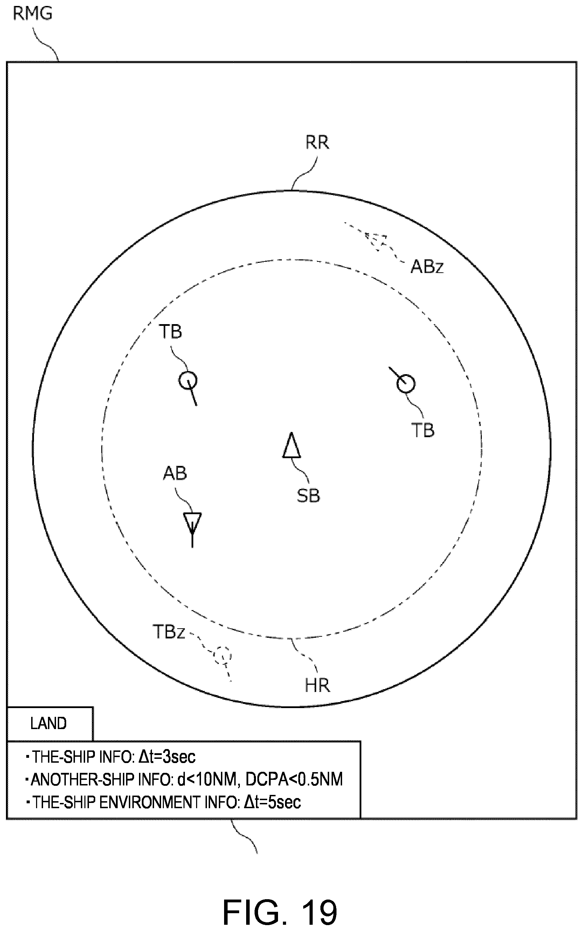

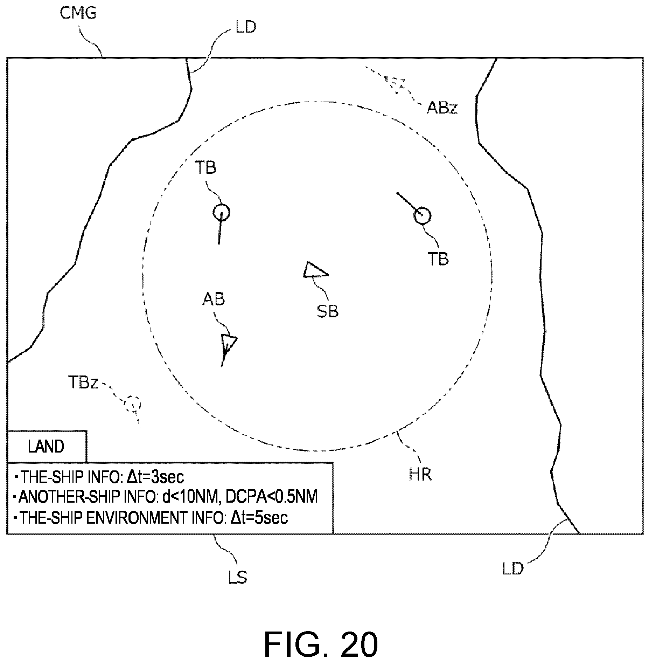

As illustrated in Fig. 19, the display processor 34 may superimpose and display the image based on the light echo data on the radar image RMG based on the echo data. Further, as illustrated in Fig. 20, the display processor 34 may superimpose and display the image based on the light echo data on the radar image and an electronic nautical chart CMG.

In detail, the display processor 34 may display a circular range HR corresponding to the threshold TH on the basis of the ship position SB on the radar image RMG or the electronic nautical chart CMG based on the light echo data (see Fig. 9) where the value of which the distance from the ship is the threshold TH or above is thinned out.

The display processor 34 may display another ship symbols TB and AB within the circular range HR corresponding to the threshold TH discriminatingly from another ship symbols TBz and ABz outside the circular range HR. For example, the another ship symbols TB and AB within the circular range HR may be indicated by solid lines, and the another ship symbols TBz and ABz outside the circular range HR may be indicated by broken lines. Alternatively, the color, the shape, the pattern, or the transparency may be differentiated from each other.

Alternatively, the display processor 34 may display character(s) indicative of a thinning state of the value from the echo data when generating the light echo data. The character(s) indicative of the thinning state may be displayed inside an indication frame LS provided in the image. The thinning state may indicate the area where the value is thinned out or the thinning ratio of the value.

For example, like "d<10NM," the character(s) indicating that the light echo data is data limited to a value less than 10 NM from the ship (i.e., a value exceeding 10NM from the ship is thinned out from the echo data) may be displayed.

Alternatively, when another-ship data is included in the transmission data set, character(s) like "DCPA<0.5NM" may be displayed so that it indicates that the another-ship data is limited to those with the DCPA indicative of the collision risk is 0.5 NM or less, and the another-ship data exceeding 0.5NM is thinned out.

Alternatively, when the-ship data or the-ship environment data is included in the transmission data set, character(s) like "Δt=3sec" may be displayed so that it indicates that the frequency at which the-ship data or the-ship environment data is included in the transmission data is every 3 seconds.

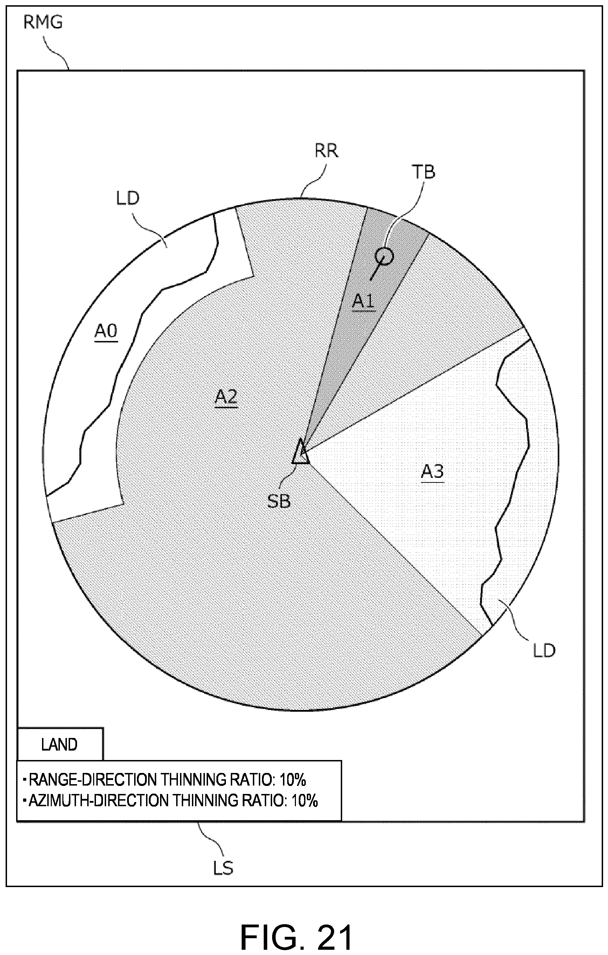

Alternatively, as illustrated in Fig. 21, the display processor 34 may discriminatingly display a plurality of areas A1-A3 with different thinning ratios in the radar image RMG, for example, by differentiating the color, the pattern, or the transparency.

In the illustrated example, the high-notable area A1 where the thinning ratio is low is displayed so that the color may be made deeper than the normal thinning-ratio area A2 to make it more notable. On the other hand, the low-notable area A3 where the thinning ratio is high may be displayed so that the color is made thinner than the normal thinning-ratio area A2 to make it less notable.

The display processor 34 may thin out all the values of an area (i.e., absence area) corresponding to the land LD, and based on the light echo data (see Fig. 13) including the absence area, it may remove an area A0 corresponding to the absence area from the circular range RR of the radar image RMG.

Alternatively, the display processor 34 may display character(s) indicative of the thinning ratio in the range direction or the azimuth direction inside the indication frame LS, like "range-direction thinning ratio: 10%" or "azimuth-direction thinning ratio: 10%."

As described above, by superimposingly displaying the image based on the light echo data on the radar image RMG or the electronic nautical chart CMG, it becomes possible to grasp the information which is displayed on the ship information gathering device 21 side, while checking the radar image RMG or the electronic nautical chart CMG.

### [THIRD EMBODIMENT]

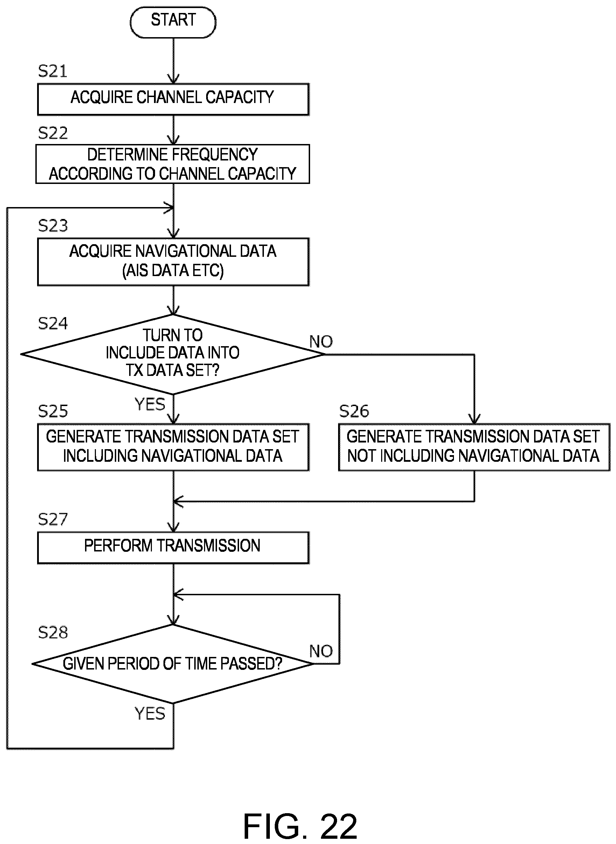

Fig. 22 is a flowchart illustrating one example of a procedure of processing according to a change in the frequency according to the channel capacity of the ship information sharing method realized by the ship-side system 10. The controller 30 of the ship information sharing device 1 may function as the acquirer 31, the thinner 32, the transmission processor 33, and the channel capacity acquirer 36 which are illustrated in Fig. 4 by performing the information processing illustrated in Fig. 22 according to the program.

First, the controller 30 may acquire the channel capacity of the channel between the ship information sharing device 1 and the ship information gathering device 21 (S21: Processing as the channel capacity acquirer 36).

Next, the controller 30 may determine a frequency (e.g., a frequency like once in several seconds, once in several minutes, or once in tens of minutes, or once in several times or once in tens of times) to include the navigational data into the transmission data set according to the acquired channel capacity (S22: Processing as the thinner 32).

Next, the controller 30 may acquire the navigational data, such as the echo data or the AIS data, or the position, the heading, or the route data of the ship (S23: Processing as the acquirer 31).

Next, the controller 30 may perform thinning based on the determined frequency. In detail, if it is the timing or the turn to include the navigational data into the transmission data set (S24: YES), the controller 30 may generate the transmission data set including the navigational data (S25: Processing as the thinner 32).

On the other hand, if it is not the timing or the turn to include the navigational data into the transmission data set (S24: NO), the controller 30 may generate the transmission data set which does not include the navigational data (S26: Processing as the thinner 32). The navigational data which was not included in the transmission data set may be discarded.

Next, the controller 30 may transmit the transmission data set to the ship information gathering device 21 by using the communication apparatus 9 (S27: Processing as the transmission processor 33). The transmission data set may be transmitted to the exterior of the ship from the communication apparatus 9, and may then be acquired by the ship information gathering device 21.

The controller 30 may repeat the processings of S21-S27 described above each time a given period of time passes (S28). Further, if the channel capacity changes on the way, the controller 30 may change the frequency to include the navigational data into the transmission data set in accordance with the change in the channel capacity.

By the above, the processing of changing the frequency according to the channel capacity is finished. Thus, by changing the frequency to include the navigational data into the transmission data set according to the channel capacity, it becomes possible to share the navigational data as much as possible.

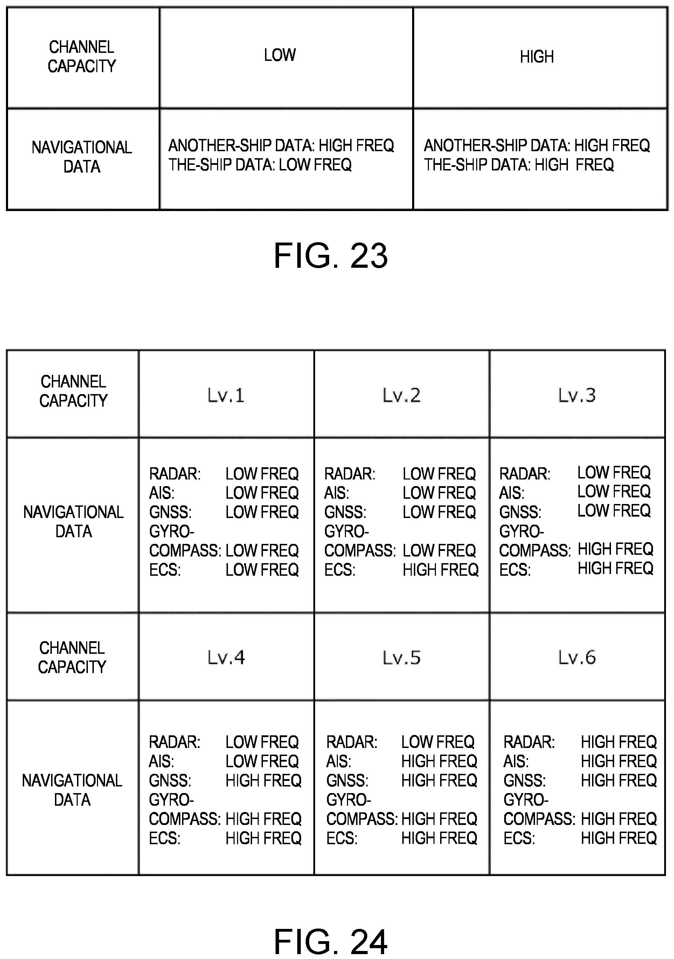

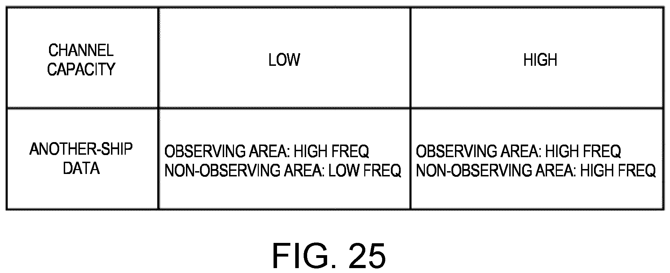

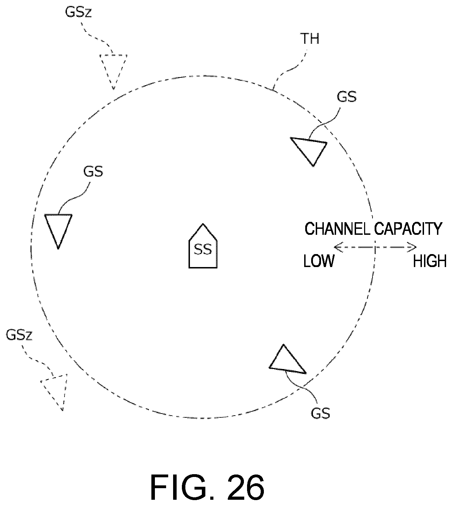

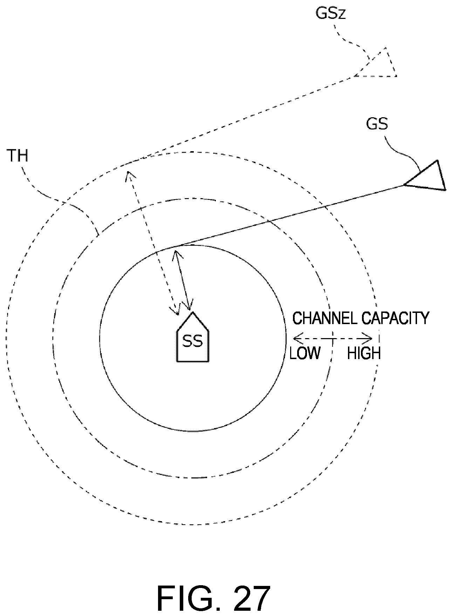

Below, a concrete example of the thinning is described. Figs. 23 and 24 are views illustrating examples of the frequency change according to the channel capacity and the data type. Fig. 25 is a view illustrating one example of the frequency change according to the channel capacity and the range. Figs. 26 and 27 are views illustrating one example of the threshold change according to the channel capacity.

As illustrated in Figs. 23 and 24, the thinner 32 may change the frequency by the type of navigational data. That is, with respect to the frequency to include the navigational data of a given type, the thinner 32 may lower a frequency to include other types of navigational data into the transmission data set, as the channel capacity decreases.

For example, as illustrated in Fig. 23, with respect to the frequency to include another-ship data, the thinner 32 may reduce the frequency to include the-ship data into the transmission data set, as the channel capacity decreases. That is, when the channel capacity is above the threshold, it may increase the frequencies of both the another-ship data and the-ship data, and when the channel capacity is below the threshold, it may maintain the frequency of the another-ship data high and decrease the frequency of the-ship data.

The another-ship data may be echo data or TT data generated by the radar 3, or AIS data received by the AIS 4. The-ship data may be the position of the ship detected by the GNSS receiver 6, the heading of the ship detected by the gyrocompass 7, or the route data generated by the ECS 8.

For example, as illustrated in Fig. 24, the thinner 32 may increase gradually or in a stepwise manner the type of navigational data of which the frequency is to be decreased as the channel capacity decreases, for example, in order of the echo data generated by the radar 3, the AIS data received by the AIS 4, the position of the ship detected by the GNSS receiver 6, the heading of the ship detected by the gyrocompass 7, and the route data generated by the ECS 8.

Thus, when the channel capacity decreases, the amount of transmission data can be reduced by maintaining the frequency to include the higher-importance type of data among the navigational data into the transmission data set, and reducing the frequency to include other type of data into the transmission data set.

As illustrated in Fig. 25, the thinner 32 may change the frequency by the range for the another-ship data. That is, the thinner 32 may reduce the frequency to include the another-ship data within the non-observing area NA into the transmission data set with respect to the frequency to include the another-ship data within the observing area AA into the transmission data set, as the channel capacity decreases. The examples of the observing area AA and the non-observing area NA have been described in association with Figs. 10 to 15.

Thus, when the channel capacity decreases, the amount of transmission data can be reduced by maintaining the frequency to include the another-ship data within the observing area AA into the transmission data set, and reducing the frequency to include the another-ship data within the non-observing area NA into the transmission data set.

As illustrated in Figs. 26 and 27, the thinner 32 may change the threshold TH for including the another-ship data into the transmission data set, according to the channel capacity.

For example, as illustrated in Fig. 26, when the another-ship data of another ship GS of which the distance from the ship SS is the threshold TH or below is included into the transmission data set, and the another-ship data of another ship GSz exceeding the threshold TH is not included into the transmission data set, the thinner 32 may change the threshold TH of the distance according to the channel capacity.

For example, as illustrated in Fig. 27, when the another-ship data of another ship GS of which the DCPA indicative of the collision risk is the threshold TH or below is included into the transmission data set, and the another-ship data of another ship GSz exceeding the threshold is not included into the transmission data set, the thinner 32 may change the threshold TH of the DCPA according to the channel capacity.

The collision risk may increase as the DCPA decreases, and decrease as the DCPA increases. Thus, the case where the DCPA is the threshold TH or below may correspond to a case where the collision risk is the threshold or above, and the case where the DCPA exceeds the threshold TH may correspond to a case where the collision risk is below the threshold.

Thus, when the channel capacity decreases, the amount of transmission data can be reduced by maintaining the frequency to include the another-ship data of the higher-importance another ship into the transmission data set, and reducing the frequency to include the another-ship data of other ships into the transmission data set.

Alternatively or additionally, the thinner 32 may change the frequency to include the position of the ship into the transmission data set according to the ship speed of the ship, other than the channel capacity. That is, the thinner 32 may increase the frequency to include the position of the ship into the transmission data set as the ship speed of the ship increases, and may reduce the frequency to include the position of the ship into the transmission data set as the ship speed of the ship decreases.

Although the embodiments of the present disclosure are described above, the present disclosure is not limited to the embodiments described above and it is needless to say that various changes may be possible for the person skilled in the art.

### DESCRIPTION OF REFERENCE CHARACTERS

1 Ship Information Sharing Device, 2 Display Unit, 3 Radar, 4 AIS, 6 GNSS Receiver, 7 Gyrocompass, 8 ECS, 9 Communication Apparatus, 10 Ship-Side System, 20 Land-Side System, 21 Ship Information Gathering Device, 22 Display Unit, 23 Radar, 24 AIS, 28 ECS, 30 Controller, 31 Acquirer, 32 Thinner, 33 Transmission Processor, 34 Display Processor, 35 Risk Calculator, 36 Channel Capacity Acquirer, 100 Ship Information Sharing System

## Claims

1. A ship information sharing device, comprising:
an acquirer configured to serially acquire navigational data according to navigation of a ship, the navigational data detected by a detection apparatus mounted on the ship;
a channel capacity acquirer configured to acquire a channel capacity of a channel to a ship information gathering device;
a thinner configured to change, according to the channel capacity, a frequency to include the navigational data into a transmission data set serially transmitted to the ship information gathering device; and
a transmission processor configured to transmit the transmission data set to the ship information gathering device.

2. The ship information sharing device of claim 1, wherein the acquirer acquires another-ship data indicative of a position of another ship existing around the ship, as the navigational data,
wherein another-ship data of another ship of which a distance from the ship is a threshold or above is not included into the transmission data set, and
wherein the thinner changes the threshold according to the channel capacity.

3. The ship information sharing device of claim 1 or 2, wherein the acquirer acquires another-ship data indicative of a position of another ship existing around the ship, as the navigational data, the ship information sharing device further comprising a calculator configured to calculate a collision risk of the ship with the another ship,
wherein another-ship data of another ship of which the collision risk is a threshold or below is not included into the transmission data set, and
wherein the thinner changes the threshold according to the channel capacity.

4. The ship information sharing device of any one of claims 1 to 3, wherein the acquirer acquires the position and a ship speed of the ship as the navigational data, and
wherein the thinner changes a frequency to include the position of the ship into the transmission data set according to the ship speed.

5. The ship information sharing device of any one of claims 1 to 4, wherein the acquirer acquires another-ship data indicative of a position of another ship existing around the ship as the navigational data, and
wherein, with respect to a frequency to include another-ship data of another ship within an observing area into the transmission data set, the thinner reduces a frequency to include the another-ship data of another ship within a non-observing area other than the observing area, as the channel capacity decreases.

6. The ship information sharing device of claim 5, further comprising an acquirer configured to acquire a heading of the ship,
wherein the thinner uses an area between the heading and the starboard direction on the basis of the ship as the observing area.

7. The ship information sharing device of claim 5, further comprising an acquirer configured to acquire a heading of the ship,
wherein the thinner uses an area ahead of the ship as the observing area.

8. The ship information sharing device of claim 5, further comprising an acquirer configured to acquire a heading of the ship,
wherein the thinner uses a guard zone for detecting an entry of a target object set on the basis of the ship in the radar as the observing area.

9. The ship information sharing device of claim 5, further comprising:
an acquirer configured to acquire a position of the ship; and
a calculator configured to calculate a collision risk of the ship with the another ship,
wherein the thinner uses an area corresponding to another ship or an area of which the collision risk is a threshold or above as the observing area.

10. The ship information sharing device of any one of claims 1 to 9, wherein the acquirer acquires a plurality of types of navigational data detected by a plurality of types of detection apparatuses, and
wherein, with respect to a frequency to include a given type of navigational data among the plurality of types of navigational data, the thinner reduces a frequency to include other types of navigational data into the transmission data set, as the channel capacity decreases.

11. The ship information sharing device of any one of claims 1 to 10, wherein the acquirer acquires the-ship data according to the ship itself, and another-ship data according to another ship other than the ship, as the navigational data, and
wherein the thinner reduces a frequency to include the the-ship data into the transmission data set with respect to a frequency to include the another-ship data, as the channel capacity decreases.

12. A ship information sharing method, comprising steps of:
serially acquiring navigational data according to navigation of a ship, the navigational data detected by a detection apparatus mounted on the ship;
acquiring a channel capacity of a channel to a ship information gathering device;
changing, according to the channel capacity, a frequency to include the navigational data into a transmission data set serially transmitted to the ship information gathering device; and
transmitting the transmission data set to the ship information gathering device.

13. A ship information sharing system, comprising:
a ship information gathering device;
a detection apparatus mounted on a ship and configured to serially generate navigational data according to navigation of the ship;
a ship information sharing device configured to acquire a channel capacity of a channel to the ship information gathering device, and change, according to the channel capacity, a frequency to include the navigational data into a transmission data set serially transmitted to the ship information gathering device; and
a communication apparatus configured to transmit the transmission data set to the ship information gathering device.
